Europäisches Patentamt

European Patent Office

Office européen des brevets

(19)

(11) Veröffentlichungsnummer: **0 193 087**
**B1**

(12) **EUROPÄISCHE PATENTSCHRIFT**

(45) Veröffentlichungstag der Patentschrift :
**11.01.89**

(51) Int. Cl.⁴ : **F 16 L   3/10, F 16 L 33/04**

(21) Anmeldenummer : **86102112.9**

(22) Anmeldetag : **19.02.86**

(54) **Rohrschelle.**

(30) Priorität : **23.02.85 DE 3506395**

(43) Veröffentlichungstag der Anmeldung :
**03.09.86 Patentblatt 86/36**

(45) Bekanntmachung des Hinweises auf die Patenterteilung : **11.01.89 Patentblatt 89/02**

(84) Benannte Vertragsstaaten :
**AT BE CH DE FR GB IT LI NL SE**

(56) Entgegenhaltungen :
**CH--A--   278 700**
**FR--A-- 2 420 279**
**US--A-- 1 482 564**

(73) Patentinhaber : **Allert, Kurt**
**Panoramaweg 3**
**D-7238 Oberndorf/Neckar (DE)**

(72) Erfinder : **Allert, Kurt**
**Panoramaweg 3**
**D-7238 Oberndorf/Neckar (DE)**

(74) Vertreter : **König, Oskar, Dr.-Ing. Dipl.-Phys.**
**Klüpfelstrasse 6 Postfach 51**
**D-7000 Stuttgart 1 (DE)**

EP 0 193 087 B1

Jouve, 18, rue St-Denis, 75001 Paris, France

## Beschreibung

Die Erfindung betrifft eine Rohrschelle gemäß dem Oberbegriff des Anspruches 1.

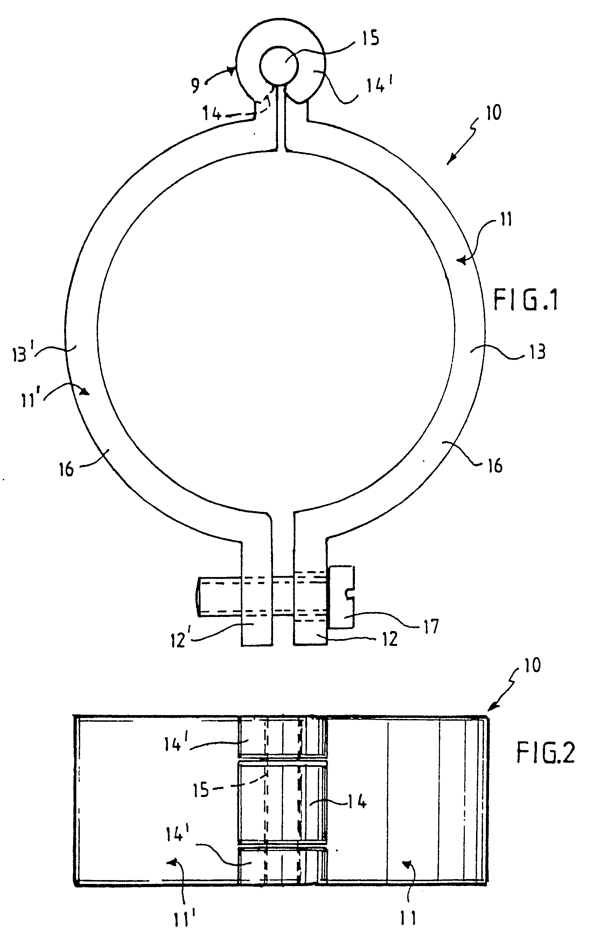

Jedes der beiden Rohrschellenteile hat man bisher aus einem Metallstreifen hergestellt, dessen einer Endbereich zum Flansch abgebogen und dessen anderer Endbereich zur Bildung des mindestens einen Scharnierauges hakenförmig umgebogen wurde. Ein Ausführungsbeispiel einer solchen vorbekannten Rohrschelle 10 ist in den Figuren 1 und 2 dargestellt. Die beiden durch ein Scharnier 9 miteinander gelenkig verbundenen Rohrschellenteile 11, 11' sind durch je einen einlagigen, gebogenen Metallstreifen 16 gebildet. Die einen freien Enden dieser beiden Metallstreifen 16 sind zu den ebenen Flanschen 12, 12' rechtwinklig von den Halbschalen 13, 13' aus abgebogen und die anderen freien Enden sind ·hakenförmig zu den Scharnieraugen 14, 14' gebogen, wobei an der Halbschale 11 ein einziges, mittleres Scharnierauge 14 und an der anderen Halbschale 11' zwei jeweils der halben Länge des mittleren Scharnierauges 14 entsprechende Scharnieraugen 14' angeordnet sind, welch letztere in dem Zwischenraum zwischen sich das mittlere Scharnierauge 14 aufnehmen. In diese Scharnieraugen 14, 14' ist ein Scharnierbolzen 15 eingesteckt, so daß die beiden starren Rohrschellenteile 11, 11' um die Längsachse des Scharnierbolzens 15 relativ zueinander drehbar gelagert sind. Die beiden Flansche 12, 12' erstrecken sich über die volle Breite der beiden Streifen 16 und sind durch eine Schraube 17 miteinander zum Spannen dieser Rohrschelle 10 verbunden, die ein Loch des Flansches 12 mit Spiel durchdringt und in eine Gewindebohrung des anderen Flansches 12' eingeschraubt ist.

Durch Drehen der Schraube 17 läßt sich diese Rohrschelle 10 auf von ihr umfaßten Stangen, Rohren, Schläuchen, Rohrsegmenten oder dergl. zu deren Halten oder Zusammenhalten spannen. Um bei Anwendung vorbestimmter maximaler Spannkräfte ein Aufbiegen der nur hakenförmig gebogenen Scharnieraugen 14' zu vermeiden, muß diese Rohrschelle 10 aus entsprechend dicken Metallstreifen 16 gebildet sein. Selbst dann besteht immer noch die Gefahr, daß die Spannkräfte über die vorgesehene zulässige Grenze erhöht werden und die Scharnieraugen dann durch diese zu hohen Spannkräfte aufgebogen werden und so die Rohrschelle unbrauchbar wird. Diese Rohrschelle weist infolge ihrer relativ dicken Streifen 16 relativ hohes Gewicht auf und man muß bei ihr darauf achten, daß beim Spannen die zulässigen Spannkräfte nicht überschritten werden. Auch werden ihre Kosten durch die relativ dicken Streifen 16 entsprechend hoch. Eine derartige Rohrschelle ist bspw. durch die FR-A-2420279 bekannt geworden.

Es ist ferner auch bekannt (US-A-1,482,564), die Flansche der beiden durch je einen einlagigen Streifen gebildeten Rohrschellenteile V-förmig zu biegen, um einen von der Rohrschelle umfaßten Drahtring mittels in den freien Enden der Flansche angeordneten Einkerbungen im Zwischenraum zwischen den Halbschalen der beiden Rohrschellenteile zu führen und die Flansche auch abzustützen. Auf die durch die hakenförmig gebogenen Scharnieraugen bestimmten zulässigen Spannkräfte hat dies jedoch keinen Einfluß.

Es ist eine Aufgabe der Erfindung, eine Rohrschelle gemäß dem Oberbegriff des Anspruches 1 zu schaffen, die bei vorbestimmten maximalen Spannkräften dünnwandiger ausgebildet werden kann und bei der die Scharnieraugen besonders hohe Spannkräfte aushalten können.

Diese Aufgabe wird erfindungsgemäß durch eine Rohrschelle gemäß Anspruch 1 gelöst.

Der erfindungsgemäße Rohrschelle ist bei kostengünstiger, einfacher Bauart bei gegebener Dicke der Halbschalen und der Flansche ihrer beiden Rohrschellenteile mit viel höheren Spannkräften belastbar als eine Rohrschelle gemäß Fig. 1 und 2 mit hakenförmig gebogenen Scharnieraugen. Und zwar können sich bei der erfindungsgemäßen Rohrschelle die Scharnieraugen der beiden Rohrschellenteile auch bei Anwendung größter Spannkräfte nicht mehr wie Haken aufbiegen. Die Erfindung ermöglicht es deshalb, die neuartige Rohrschelle bei gegebener maximaler Spannkraft aus Streifen aus Metall, Kunststoff oder dergl. herzustellen, deren Dicke wesentlich kleiner als die halbe Dicke der Streifen der beiden Rohrschellenteile einer herkömmlichen, in Fig. 1 und 2 dargestellten Rohrschelle vergleichbarer Größe und Breite ist, wobei sie jedoch dieselben Anwendungsbereiche wie die Rohrschelle nach Fig. 1 und 2 und ggfs. wegen ihrer besseren Eigenschaften sogar auch noch zusätzliche Anwendungsgebiete haben kann. Auch ist die erfindungsgemäße Rohrschelle wegen ihres geringeren Materialbedarfs kostengünstiger als eine vergleichbare Rohrschelle der Bauart nach Fig. 1 und 2.

So wurde im Versuch eine Rohrschelle nach der Erfindung untersucht, deren beiden Rohrschellenteile aus Stahlstreifen von 1 mm Dicke hergestellt wurden. Sie hielt Spannkräfte aus, die im Falle einer herkömmlichen Rohrschelle derselben Breite und desselben lichten Durchmessers gemäß Fig. 1 und 2 für ihre beiden Rohrschellenteile Stahlstreifen von mindestens 4 mm Dicke erforderlich machten.

Auch kann bei der erfindungsgemäßen Rohrschelle wegen der Verringerung der Dicke ihrer beiden Rohrschellenteile erheblich Material und Gewicht und damit Kosten eingespart werden. Auch kann die Breite erfindungsgemäßer Rohrschellen gegenüber Rohrschellen der vorbekannten Bauart beträchtlich verringert werden, wenn es der Anwendungszweck zuläßt. Auch wirkt sich die durch die geringere Dicke und/oder Breite der beiden Rohrschellenteile erzielbare höhere Elastizität im Betrieb günstig aus.

In den Fig. 3 bis 11 sind Rohrschellen gemäß Ausführungsbeispielen der Erfindung dargestellt. Es zeigen :

Fig. 3 eine Rohrschelle gemäß einem Ausführungsbeispiel der Erfindung in Vorderansicht,

Fig. 4 eine Draufsicht auf die Rohrschelle nach Fig. 3,

Fig. 5 und 6 gebrochene Abwicklungen der die Rohrschellenteile der Rohrschelle nach Fig. 3 und 4 bildenden Streifen,

Fig. 7 einen Ausschnitt aus einer Rohrschelle gemäß einem zweiten Ausführungsbeispiel der Erfindung,

Fig. 8 eine Rohrschelle gemäß einem weiteren Ausführungsbeispiel der Erfindung in Vorderansicht,

Fig. 9 und 10 Seitenansichten der Rohrschelle nach Fig. 8, gesehen in Richtung des Pfeiles A (Fig. 9) bzw. B (Fig. 10), wobei die Spannschraube weggelassen ist,

Fig. 11 einen vergrößerten Teilschnitt durch ein Rohrschellenteil der Rohrschelle nach Fig. 8 gesehen entlang der Schnittlinie 11-11, wobei das andere Rohrschellenteil nur strichpunktiert ausschnittsweise angedeutet ist.

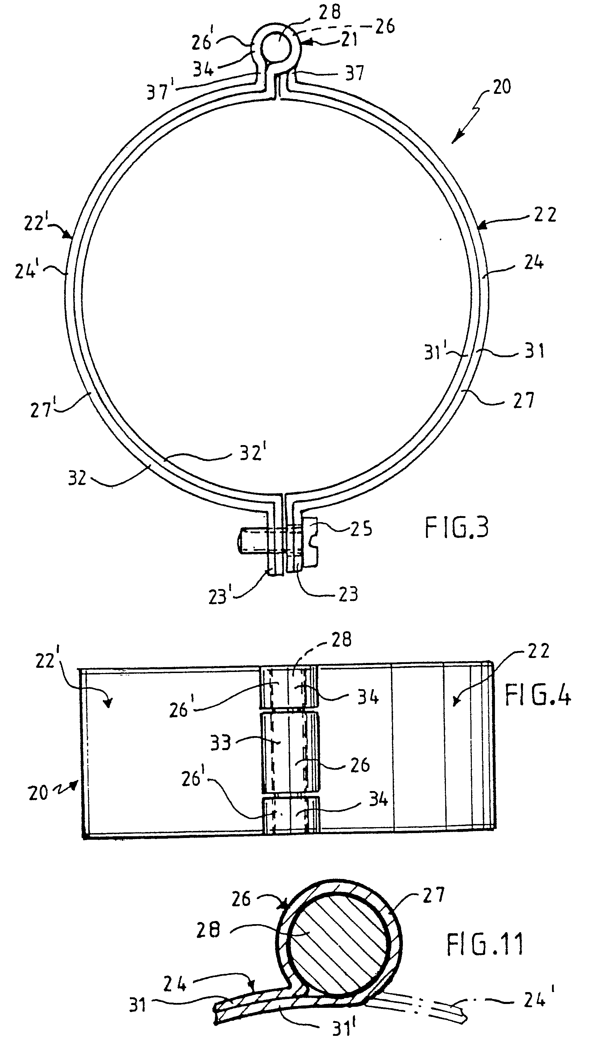

Die Rohrschelle 20 nach den Fig. 3 bis 6 weist zwei durch ein Scharnier 21 gelenkig miteinander verbundene Rohrschellenteile 22, 22' auf, deren von dem Scharnier 21 abgewendeten Endbereiche ebene Flansche 23, 23' sind, die rechtwinklig von den in wesentlichen halbkreisförmigen Halbschalen 24, 24' dieser Rohrschellenteile 22, 22' abstreben und durch eine Schraube 25 zum Spannen der Rohrschelle 20 miteinander verbunden sind, die ein Loch 29 des Flansches 23 mit Spiel durchdringt und in eine Gewindebohrung 30 des anderen Flansches 23' eingeschraubt ist.

Das Rohrschellenteil 22' weist zwei äußere Scharnieraugen 26' und das Rohrschellenteil 22 ein doppelt so breites, mittleres Scharnierauge 26 auf, das in den Zwischenraum zwischen die beiden äußeren Scharnieraugen 26' mit geringem Spiel hineinragt. Diese Scharnieraugen 26, 26' sind von einem Scharnierbolzen 28 durchdrungen, der die Drehung der beiden Rohrschellenteile 22, 22' relativ zueinander um seine Längsachse ermöglicht und gegen axiales Verschieben gesichert ist, bspw. durch Festsitz im mittleren Scharnierauge 26. Dieser Scharnierbolzen 28 kann vorzugsweise aus Metall bestehen, ggfs. jedoch auch nichtmetallisch sein, bspw. aus hartem Kunststoff bestehen. Die durch die Scharnieraugen 26, 26' gebildete Scharnieraugenreihe erstreckt sich über die Breite der zweilagigen Bereiche von Streifen 27, 27'.

Abweichend von der Rohrschelle 10 nach Fig. 1 und 2 ist jedoch jedes der beiden Rohrschellenteile 22, 22' der Rohrschelle 20 nach den Fig. 3 bis 4, wie dargestellt, durch je einen einstückigen Streifen 27, 27' gebildet, der im Bereich des Flansches 23 bzw. 23' und der Halbschale 24 bzw. 24' zweilagig und nur im Bereich des Scharnierauges 26 bzw. der Scharnieraugen 26' einlagig verlegt ist. Die beiden aneinander anliegenden Lagen 31, 31' des Streifens 27 haben konstante Breite und verlaufen vom freien Ende des durch sie gebildeten Flansches 23 bis zu dem Scharnierauge 26 parallel zueinander und sind durch den zu diesem mittleren Scharnierauge 26 schlingenartig gebogenen schmäleren Bereich 33 konstanter Breite des Streifens 27 einstückig miteinander verbunden. Die beiden aneinander anliegenden Lagen 32, 32' konstanter Breite des anderen Streifens 27' verlaufen ebenfalls vom freien Ende des durch sie gebildeten Flansches 23' bis zu den Scharnieraugen 26' parallel zueinander und sind durch die beiden schlingenartig gebogenen, schmäleren, einlagigen Bereiche 34 jeweils konstanter Breite, die die beiden äußeren Scharnieraugen 26' bilden, einstückig miteinander verbunden. Diese Scharnieraugen 26, 26' sind hier ungefähr kreisförmig gebogene, einlagige Bereiche der Streifen 27, 27' der beiden Rohrschellenteile 22, 22', welche einlagigen Bereiche aus dem Bereich 33 des Streifens 27 und aus den beiden Bereichen 34 des Streifens 27' durch Biegen gebildet sind. Es ist also der Streifen 27 bzw. 27' in dem Bereich bzw. den Bereichen, wo er das Scharnierauge 26 bzw. die Scharnieraugen 26' bildet, jeweils nur einlagig vorhanden, so daß diese Scharnieraugen 26, 26' durch jeweils nur eine Lage 33 bzw. 34 des Streifens 27 bzw. 27' gebildet sind, wogegen die Halbschale 24 bzw. 24' und der Flansch 23 bzw. 23' jedes Rohrschellenteiles 22 bzw. 22' aus jeweils zwei auf voller Breite und Länge aneinander anliegenden Lagen 31, 31' bzw. 32, 32' des Streifens 27 bzw. 27' gebildet sind.

Die beiden Rohrschellenteile 22, 22' können vorzugsweise starre Teile sein. Jedoch ist es gewünschtenfalls auch möglich, daß die Rohrschellenteile biegsam, vorzugsweise elastisch biegsam sind. Ihre Streifen 27, 27' können bevorzugt aus Metall, insbesondere Stahl, Chromnickelstahl, Aluminium oder Messing oder auch aus anderen metallischen oder auch aus nichtmetallischen Werkstoffen, wie Kunststoff oder dergl., bestehen. Diese Rohrschelle 20 kann dieselben Anwendungsgebiete wie vorbekannte geteilte Rohrschellen haben und wegen ihrer verbesserten Eigenschaften ggfs. sogar noch weitere Anwendungsgebiete.

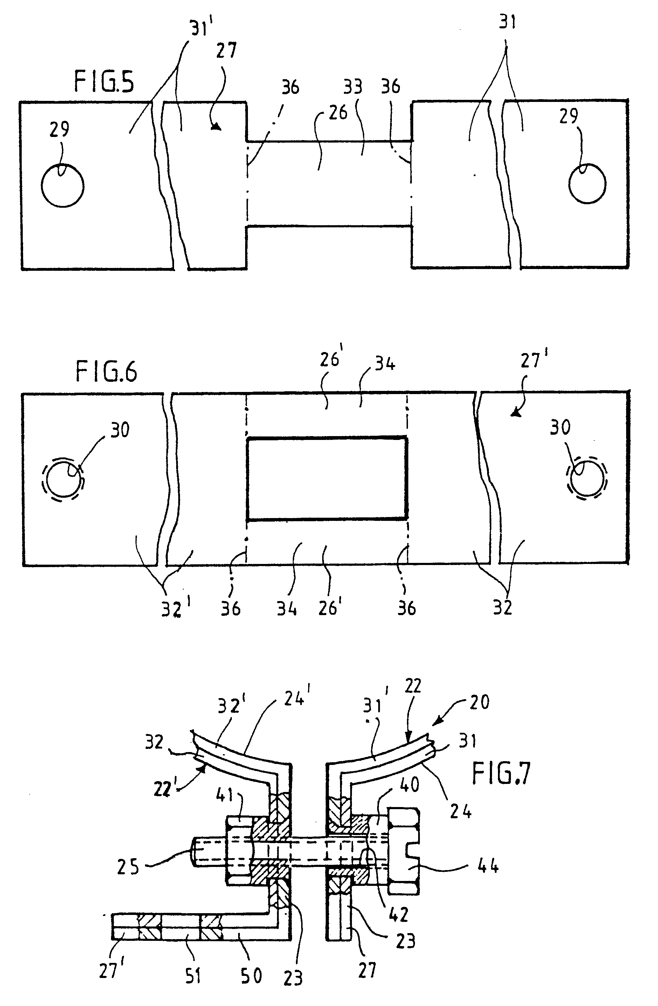

Die diese Rohrschellenteile 22, 22' bildenden Streifen 27, 27' sind in den Fig. 5 und 6 in gebrochener Abwicklung ausschnittsweise dargestellt. Die Scharnieraugen 26, 26' werden aus den mit 33 und 34 bezeichneten Streifenbereichen verringerter Breite gebogen. In den Abwicklungen der Streifen 27 bzw. 27' der Fig. 5 und 6 sind die Biegelinien, die die Scharnieraugen 26 bzw. 26' begrenzen, jeweils strichpunktiert eingezeichnet und mit 36 bezeichnet.

Die rechteckförmige Querschnitte aufweisenden Streifen 27, 27' können vorzugsweise aus Metallbändern oder Blechtafeln ausgestanzt sein. Die Streifer 27, 27' können vorzugsweise konstante Dicken aufweisen und ihre Breite ist auch im Bereich des bzw. der Augen größer, vorzugsweise wesentlich größer als ihre Dicke.

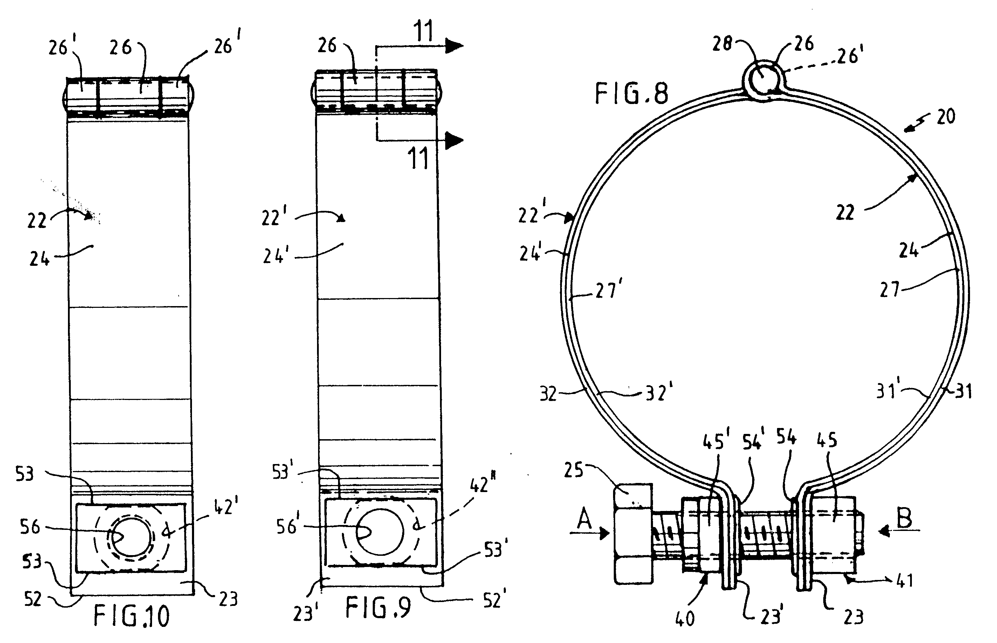

Die beiden aneinander anliegenden Lagen 31, 31' bzw. 32, 32' des Streifens 27 bzw. 27' des Rohrschellenteiles 22 bzw. 22' können im einfachsten Fall nur mittels des oder der Scharnieraugen 26 bzw. 26' miteinander verbunden sein, wobei dann zweckmäßig nur in der äußeren Lage 32 des Flansches 23' eine Gewindebohrung für die Spannschraube 25 vorgesehen sein kann und die mit dieser fluchtende Bohrung der inneren Lage 32' kann vom Gewindeschaft der Schraube 25 dann mit radialem Spiel durchdrungen werden oder man bildet diese beiden Bohrungen als von der Schraube 25 mit radialem Spiel durchdrungene Bohrungen aus und schraubt die Schraube 25 in eine nicht dargestellte, gesonderte Mutter ein, die am Flansch 23' außen zur Anlage kommt oder an ihm fest oder schwenkbar angeordnet ist. Bevorzugt können jedoch die einander gegenüberliegenden Flächen der Lagen 31, 31' bzw. 32, 32' an mindestens einer Stelle, vorzugsweise punktuell oder flächenhaft, oder über die gesamten einander gegenüberliegenden Flächen fest miteinander verbunden sein, bspw. durch Schweißen, Kleben, Kaltwalzen, Vernieten oder dergl. Bevorzugt können die beiden Lagen 31, 31' bzw. 32, 32' außer durch das oder die Scharnieraugen 26 bzw. 26' nur noch an dem Flansch 23 bzw. 23' miteinander fest verbunden sein und im übrigen unverbunden sein und so in diesem übrigen Bereich lose aneinander anliegen. Ein Ausführungsbeispiel der Erfindung dieser Art ist ausschnittsweise in Fig. 7 dargestellt, die einen Ausschnitt aus einer Rohrschelle 20 zeigt, die sich von der nach Fig. 3 bis 6 in folgendem unterscheidet :

Die beiden Lagen 31, 31' des Streifens 27 des Rohrschellenteiles 22 sind außer durch das nicht dargestellte Scharnierauge 26 nur noch am ebenen Flansch 23 mittels einer eine Durchgangsbohrung 42 für die Schraube 25 aufweisenden hohlen, ein starres Verbindungsstück bildende Niethülse 40, auf der der Kopf 44 der Schraube 25 beim Spannen der Rohrschelle 20 aufliegt, wie dargestellt, miteinander fest verbunden. Diese feste Verbindung der beiden Lagen 31, 31' am Flansch 23 ist unlösbar. Auch wird durch die Niethülse 40 eine besonders gute Auflage für den Schraubenkopf 44 geschaffen. Die Durchgangsbohrung 42 wird vom Gewindeschaft der Spannschraube 25 mit radialem Spiel durchdrungen. Ferner ist am ebenen Flansch 23' des anderen Rohrschellenteiles 22' eine ein starres Verbindungsstück bildende Mutter 41 angenietet, die die beiden Lagen 32, 32' des Streifens 27' am Flansch 23' fest und unlösbar miteinander verbindet und in die die Schraube 25 zum Spannen der Rohrschelle 20 eingeschraubt ist. Auch hier sind die beiden Lagen 32, 32' außer durch die Scharnieraugen 26' nur noch durch das Verbindungsstück 41 fest miteinander verbunden. Diese Verbindung der beiden Lagen 31, 31' bzw. 32, 32' des Streifens nur durch die Scharnieraugen 26 bzw. 26' und das Verbindungsstück 40 bzw. 41 ergibt gleichmässiges Einleiten der beim Spannen der Rohrschelle auf die Scharnieraugen 26, 26' einwirkenden Kräfte in die beiden Lagen 31, 31' und 32, 32', da diese nur am Flansch 23 bzw. 23' fest miteinander verbunden sind und zwischen Flansch und dem oder den Scharnieraugen zum Kräfteausgleich aufeinander etwas gleiten können und läßt so besonders große Spannkräfte zu. Ferner ist am Flansch 23' noch ein zu ihm rechtwinklig angeordneter, ebenfalls durch die beiden Lagen 32, 32' des Streifens 27' mit gebildeter ebener Halter 50, fest angeordnet, der, wie dargestellt, eine Abwinklung des Flansches 23' bildet und mindestens ein Durchgangsloch 51 oder mindestens eine Gewindebohrung aufweist und so an einem dem Tragen der Rohrschelle 20 dienenden Träger, bspw. an einer Gewindestange mittels Muttern, befestigt werden kann. Auch andere Halter können an der Rohrschelle 20 zu deren Tragen angeordnet sein, bspw. ein Stift an der Halbschale 24'. Ein solcher Halter oder mehrere solcher Halter, wie zum Beispiel der Halter 50, ermöglicht es, diese Rohrschelle 20 zum Halten von Schildern, Gerüststangen von Baugerüsten, Rohren usw. einzusetzen, wobei in sie jeweils dann nur ein Teil, wie eine einzige Stange, Rohr oder dergl., eingespannt zu werden braucht. Sie kann jedoch, wie auch die Rohrschelle 20 nach Fig. 3-6, auch zum Zusammenhalten von zwei oder mehr zwischen ihre Halbschalen 24, 24' einzuspannenden Teilen dienen, wie bspw. zum Zusammenhalten von ein Rohrstück oder dergl. bildenden Segmenten, von zwei aneinander angesetzten Stangen, Rohren oder dergl. oder von ineinander geschobenen Teilen, wie bspw. dem Halten eines Schlauches auf einem oder auf zwei in ihn eingesetzten Rohrstutzen, usw. Die Rohrschelle 20 kann auch noch andere beliebige Anwendungen haben, bspw. dem Tragen von starren oder flexiblen Leitungen dienen, usw.

Wie man aus Fig. 3 ohne weiteres ersieht, kann man die beiden Rohrschellenteile 22, 22' der Rohrschelle 20 um weit mehr als 180° zum Einsetzen von durch diese Rohrschelle 20 zu haltenden oder einzuspannenden Teilen auseinanderklappen, wenn man die Schraube 25 aus der ihr zugeordneten Gewindebohrung des Rohrschellenteiles 22' herausschraubt. Man kann auch bei gelockerter Schraube 25 in sie einzuspannende Teile einsetzen und herausnehmen, und das Scharnier 21 ermöglicht selbst bei starren Rohrschellenteilen 22, 22' sicheres Einspannen, Halten und Zusammenhalten von in sie eingesetzten Teilen.

Die Rohrschelle 20 nach den Fig. 8 bis 11 unterscheidet sich von der nach Fig. 3 bis 6 im wesentlichen nur bezüglich der Flansche 23, 23' und auch noch in folgender Einzelheit : Bei den beiden Rohrschellenteilen 22, 22' der Rohrschelle 20 nach Fig. 3 befinden sich das Scharnierauge 26 bzw. die Scharnieraugen 26' des jeweiligen Rohrschellenteiles 22 bzw. 22' jeweils an einem kurzen, geraden, abgewinkelten, zweilagigen, halsartigen Bereich 37 bzw. 37' der betreffenden Halbschale 24 bzw. 24', wodurch diese beiden Rohrschellenteile 22, 22' besonders weit aufklappbar sind. Bei der Rohrschelle nach den Fig. 8-11 grenzen dagegen die schlingenförmig gebogenen, einlagigen Scharnieraugen 26 bzw. 26' des betreffenden Rohrschellenteiles 22 bzw. 22' unmittelbar an das Ende des Kreisbogens der betreffenden Halbschale 24 bzw. 24' wie dargestellt an. Sie sind von einem Scharnierbolzen 28 durchdrungen. Selbst extrem große Spannkräfte vermögen diese Rohrschelle 20 allenfalls nur unbedeutend auszuweiten.

Bei der Rohrschelle 20 nach den Fig. 8 bis 11 sind die beiden aus den betreffenden Streifen 27 bzw. 27' konstanter Dicke gebildeten Lagen 31, 31' bzw. 32, 32' am betreffenden Flansch 23 bzw. 23' ähnlich wie im Ausführungsbeispiel nach Fig. 7 durch je ein starres, einstückiges Verbindungsstück 41 bzw. 40 unlösbar miteinander verbunden. Diese Verbindungsstücke 41, 40 weisen je einen ungefähr quaderförmigen Längsabschnitt 45, 45' mit länglichem, rechteckförmigen Umriß auf, der auf der vom jeweilig anderen Flansch abgewendeten Außenseite des betreffenden Flansches 23 bzw. 23' satt anliegt und dessen langen Seiten 53 bzw. 53' sich quer zur Längsrichtung des Flansches 23 bzw. 23', d. h. parallel zu dessen freien Endkante 52 bzw. 52' fast über die Breite des betreffenden Flansches 23 bzw. 23' erstrecken.

Die beiden Lagen 31, 31' bzw. 32, 32' des Streifens 27 bzw. 27' liegen jeweils auf voller konstanter Breite und Länge aneinander an und sind außer durch das betreffende Verbindungsstück 41 bzw. 40 nur noch durch das bzw. die betreffenden Augen 26 bzw. 26' miteinander verbunden.

Jeder der beiden Flansche 23 bzw. 23' weist ein Langloch 42' bzw. 42'' auf, das formschlüssig von einem Nietansatz des betreffenden Verbindungsstückes 41, 40 am Flansch 23 bzw. 23' gegen Drehen gesichert durchdrungen ist. Der im Langloch 42' bzw. 42'' befindliche Bereich des Nietansatzes ist auf die Breite des rechteckförmigen Abschnittes 45, 45' abgefräst, so daß er hierdurch zwei zueinander parallele Fasen aufweist, die mit den angrenzenden längeren Seiten 53 bzw. 53' des rechteckförmigen Abschnittes 45, 45' fluchten. Die Verbindungsstücke 40, 41 vermögen extrem große Spannkräfte aufzunehmen. An der Innenseite des Flansches 23 bzw. 23' ist dieser Nietansatz bei 54 bzw. 54' nach außen gebördelt, so daß hierdurch das Verbindungsstück 41 bzw. 40 am Flansch 23 bzw. 23' unlösbar angenietet ist. Zusätzlich ist es formschlüssig gegen Drehen gesichert.

Das Verbindungsstück 40 ist von einer glatten Bohrung 56' und das eine Mutter bildende Verbindungsstück 41 von einer Gewindebohrung 56 durchdrungen. In diese Gewindebohrung 56 ist eine die Bohrung 56' durchdringende Spannschraube 25 eingeschraubt, die dem Spannen der Rohrschelle 20 dient.

Durch die quaderförmigen Abschnitte 45, 45' dieser beiden Verbindungsstücke 41, 40 können besonders hohe Spannkräfte mittels der Spannschraube 25 auf die Flansche 23, 23' und damit auf die Rohrschelle 20 ohne Gefahr von Überlastung der Flansche ausgeübt werden.

In den Ausführungsbeispielen nach den Fig. 3-11 weisen die Streifen 27, 27' der Rohrschellenteile 22 bzw. 22' rechteckförmige Querschnitte auf, doch kann auch vorgesehen sein, ihre Querschnitte auf mindestens je einem Teilbereich der Rohrschellenteile 22 bzw. 22' schwach zu wölben, vorzugsweise nach außen konkav, und/oder mit durch Prägen gebildeten Versteifungsrippen oder dergl. zu versehen.

Die Dicken der Streifen 27, 27' können vorzugsweise 0,5 bis 3 mm, ihre Breiten im zweilagigen Bereich ca. 8 bis 50 mm betragen. Erwünschtenfalls können die Dicken und Breiten der Streifen und die Radien der kreisbogenförmigen Bereiche ihrer Halbschalen 24, 24' jedoch auch noch größer oder kleiner sein.

Obwohl bevorzugt die Streifen 27 und 27' ungefähr konstante Dicke aufweisen können, kann in manchen Fällen auch zweckmäßig vorgesehen sein, daß mindestens ein Streifen über seine Länge ungleiche Dicke aufweisen kann, bspw. an den Scharnieraugen dicker als in den zweilagigen Bereichen 31, 31' bzw. 32, 32' sein.

**Patentansprüche**

1. Aufklappbare Rohrschelle zum lösbaren Halten oder Zusammenhalten von Teilen, wie Stangen, Rohre, Schläuche, Rohrsegmente oder dergl., welche Rohrschelle zwei durch ein Scharnier gelenkig miteinander verbundene, je einen einstückigen Streifen aufweisende Rohrschellenteile aufweist, wobei der Streifen die Halbschale, das mindestens eine Scharnierauge und den Flansch des betreffenden Rohrschellenteiles bildet und in die Scharnieraugen der beiden Rohrschellenteile ein Scharnierbolzen eingesetzt ist, dadurch gekennzeichnet, daß der Streifen (27 ; 27') im Bereich des Flansches (23 ; 23') und der Halbschale (24 ; 24') des betreffenden Rohrschellenteiles (22 ; 22') zweilagig gelegt ist und daß diese beiden Lagen (31, 31' ; 32, 32') durch mindestens einen zu einem Scharnierauge (26 ; 26') gebogenen, einlagigen Bereich des Streifens (27 ; 27') miteinander verbunden sind.

2. Rohrschelle nach Anspruch 1, dadurch gekennzeichnet, daß an dem Flansch (23 ; 23') eines Rohrschellenteiles (22 ; 22') eine Spannschraube (25) angeordnet ist, die in eine Gewindebohrung des Flansches (23') des anderen Rohrschellenteiles (22') oder in eine am anderen Flansch (23' ; 23) zur Anlage kommende oder an ihm fest oder schwenkbar angeordnete Mutter (41) einschraubbar ist.

3. Rohrschelle nach Anspruch 1 oder 2, dadurch gekennzeichnet, daß die beiden Lagen (31, 31' ; 32, 32') des Streifens (27 ; 27') mindestens eines Rohrschellenteiles (22 ; 22') außer durch das mindestens eine Scharnierauge (26 ; 26') auch noch an mindestens einer Stelle, an der sie einander gegenüberliegen oder über ihre gesamten einander gegenüberliegenden Flächenbereiche fest miteinander verbunden sind.

4. Rohrschelle nach Anspruch 3, dadurch gekennzeichnet, daß die beiden Lagen (31, 31' ; 32, 32') des Streifens mindestens eines Rohrschellenteiles an mindestens einer Stelle des Flansches (23 ; 23') fest miteinander verbunden sind.

5. Rohrschelle nach Anspruch 4, dadurch gekennzeichnet, daß die beiden Lagen (31, 31' ; 32, 32') des Streifens mindestens eines Rohrschellenteiles, vorzugsweise jedes der beiden Rohrschellenteile, außer durch das mindestens eine Scharnierauge nur noch am Flansch (23, 23') fest miteinander verbunden sind, vorzugsweise nur an einer einzigen Stelle des Flansches.

6. Rohrschelle nach Anspruch 4 oder 5, dadurch gekennzeichnet, daß die beiden Lagen (31, 31' ; 32, 32') des Streifens am Flansch (23 ; 23') mittels eines eine Durchgangsbohrung oder Gewindebohrung aufweisenden, der Aufnahme einer Spannschraube (25) dienenden Verbindungsstückes (40 ; 41) fest miteinander verbunden sind, welches Verbindungsstück vorzugsweise an den Flansch angenietet sein kann.

7. Rohrschelle nach Anspruch 6, dadurch gekennzeichnet, daß das Verbindungstück (40 ; 41) in ein unrundes Loch, vorzugsweise in ein Langloch des Flansches des betreffendes Rohrschellenteiles formschlüssig eingesetzt ist.

8. Rohrschelle nach Anspruch 6 oder 7, dadurch gekennzeichnet, daß das Verbindungstück (40 ; 41) mit einem Abschnitt (45 ; 45') länglichen, rechteckförmigen Umrisses, dessen langen Seiten sich quer zur Längsrichtung des Flansches (23 ; 23') erstrecken, an dem Flansch außenseitig anliegt.

9. Rohrschelle nach Anspruch 1 oder 2, dadurch gekennzeichnet, daß die beiden Lagen (31, 31' ; 32, 32') des Streifens (27 ; 27') mindestens eines Rohrschellenteiles nur durch sein mindestens eines Scharnierauge (26 ; 26') miteinander verbunden sind.

10. Rohrschelle nach einem der Ansprüche 1-9, dadurch gekennzeichnet, daß die Streifen der beiden Rohrschellenteile (22 ; 22') aus Metall bestehen.

11. Rohrschelle nach einem der Ansprüche 1-9 dadurch gekennzeichnet, daß die Streifen der beiden Rohrschellenteile (22 ; 22') aus Kunststoff bestehen.

12. Rohrschelle nach einem der vorhergehenden Ansprüche, dadurch gekennzeichnet, daß die Rohrschellenteile (22 ; 22') starre Teile sind.

13. Rohrschelle nach einem der vorhergehenden Ansprüche, dadurch gekennzeichnet, daß an ihr ein Halter (50) angeordnet ist, der vorzugsweise durch eine Abwinklung eines Flansches (23') gebildet ist.

14. Rohrschelle nach einem der vorhergehenden Ansprüche, dadurch gekennzeichnet, daß die Scharnieraugen (26, 26') unmittelbar an die vorzugsweise ungefähr kreisbogenförmig gekrümmten Bereiche der Halbschalen (24, 24') der Rohrschellenteile angrenzen.

15. Rohrschelle nach einem der vorhergehenden Ansprüche, dadurch gekennzeichnet, daß die Dicken der Streifen (27, 27') ungefähr 0,5 bis 3 mm, ihre Breiten im zweilagigen Bereich ungefähr 8 bis 50 mm und die Radien der kreisbogenförmigen Bereiche ihrer Halbschalen (24 ; 24') ungefähr 5 bis 200 mm betragen.

16. Rohrschelle nach einem der vorhergehenden Ansprüche, dadurch gekennzeichnet, daß die Streifen (27 ; 27') der beiden Rohrschellenteile ungefähr konstante Dicke aufweisen und in den zweilagigen Bereichen ungefähr konstante Breite aufweisen.

## Claims

1. A hingeable pipe clamp for detachably holding or holding together parts, such as rods, pipes, tubes, pipe sections or the like, the pipe clamp having two pipe clamp parts pivotably connected together by a hinge and each having a one-piece strip, the strip forming the half-shell, one or more gudgeons, and the flange of the respective pipe clamp part, a hinge pin being inserted in the gudgeons of the two pipe clamp parts, characterized in that the strip (27 ; 27') is arranged in a two-ply manner in the region of the flange (23 ; 23') and the half-shell (24 ; 24') of the respective pipe clamp part (22 ; 22'), and in that these two layers (31, 31' ; 32, 32') are connected together by at least one single-ply region of the strip (27 ; 27') curved to form a gudgeon (26 ; 26').

2. A pipe clamp according to claim 1, characterised in that a clamping screw (25) is disposed on the flange (23 ; 23') of one of the pipe clamp parts (22 ; 22') and is adapted to be screwed into a threaded bore of the flange (23') of the other pipe clamp part (22') or into a nut (41) abutting the other flange (23' ; 23) or rigidly or pivotably mounted on the said other flange.

3. A pipe clamp according to claim 1 or 2, characterised in that the two layers (31, 31' ; 32, 32') of the strip (27 ; 27') of at least one pipe clamp part (22 ; 22') are rigidly connected together in at least one place at which they are opposed or by their total opposing surface areas, apart from at the one or more gudgeons.

4. A pipe clamp according to claim 3, characterised in that the two layers (31, 31' ; 32, 32') of the strip of at least one pipe clamp part are rigidly connected together in at least one part of the flange (23 ; 23').

5. A pipe clamp according to claim 4, characterised in that the two layers (31, 31' ; 32, 32') of the strip of at least one pipe clamp part, preferably of each of the pipe clamp parts, are connected together only by the flange (23, 23'), preferably only at a single place on the flange, apart from at the one or more gudgeons.

6. A pipe clamp according to claim 4 or 5, characterised in that the two layers (31, 31' ; 32, 32') of the strip are connected together at the flange (23 ; 23') by means of a connecting member (40 ; 41) having a through bore or a threaded bore and receiving a clamping screw (25), the said connecting member preferably being capable of being riveted to the flange.

7. A pipe clamp according to claim 6, characterised in that the connecting member (40 ; 41) is inserted with positive locking into a non-circular hole, preferably into an elongate hole of the flange of the respective pipe clamp part.

8. A pipe clamp according to claim 6 or 7, characterised in that the connecting member (40 ; 41) abuts the flange on the outside with a recess (45 ; 45') of elongate, rectangular outline, whose long sides extend transverse to the longitudinal direction of the flange (23 ; 23').

9. A pipe clamp according to claim 1 or 2, characterised in that the two layers (31, 31' ; 32, 32') of the strip (27 ; 27') of at least one pipe clamp part are only connected together by the one or more gudgeons (26 ; 26').

10. A pipe clamp according to one of claims 1 to 9, characterised in that the strips of the two pipe clamp parts (22 ; 22') consist of metal.

11. A pipe clamp according to one of claims 1 to 9, characterised in that the strips of the two pipe clamp parts (22 ; 22') consist of a plastics material.

12. A pipe clamp according to one of the preceding claims, characterised in that the pipe clamp parts (22 ; 22') are rigid parts.

13. A pipe clamp according to one of the preceding claims, characterised in that a handle (50) is disposed thereon, which is preferably formed by a bending back of a flange (23').

14. A pipe clamp according to one of the preceding claims, characterised in that the gudgeons (26, 26') directly border the preferably approximately arc-shaped regions of the half-shells (24, 24') of the pipe clamp parts.

15. A pipe clamp according to one of the preceding claims, characterised in that the thicknesses of the strips (27, 27') are approximately 0.5 to 3 mm, their widths in the two-ply region are approximately 8 to 50 mm, and the radii of the arc-shaped regions of their half-shells (24 ; 24') are approximately 5 to 200 mm.

16. A pipe clamp according to one of the preceding claims, characterised in that the strips (27 ; 27') of the two pipe clamp parts have approximately constant thicknesses and have approximately constant thicknesses in the two-ply regions.

## Revendications

1. Collier tubulaire repliable sur lui-même, pour la retenue ou la solidarisation libérable de pièces telles que des tiges, des tuyaux, des flexibles, des segments tubulaires ou objets analogues, ce collier tubulaire comprenant deux parties qui sont reliées l'une à l'autre de manière articulée, par l'intermédiaire d'une charnière, et présentent chacune une bande monobloc, la bande formant la demi-coquille, l'œillet de charnière prévu au minimum et la bride de la partie considérée du collier tubulaire, et une cheville de charnière étant engagée dans les œillets de charnière des deux parties du collier tubulaire, caractérisé par le fait que la bande (27 ; 27') est agencée en deux couches dans la région de la bride (23 ; 23') et de la demi-coquille (24 ; 24') de la partie considérée (22 ; 22') du collier tubulaire ; et par le fait que ces deux couches (31, 31' ; 32, 32') sont reliées mutuellement par l'intermédiaire d'au moins une région de la bande (27 ; 27'), qui présente une seule couche et est cintrée pour former un œillet de charnière (26 ; 26').

2. Collier tubulaire selon la revendication 1, caractérisé par le fait qu'une vis de serrage (25), disposée sur la bride (23 ; 23') d'une partie (22 ; 22') du collier tubulaire, peut être vissée dans un perçage taraudé de la bride (23') de l'autre partie (22') du collier tubulaire, ou bien dans un écrou (41) venant s'appliquer contre l'autre bride (23' ; 23), ou installé sur cette dernière de manière fixe ou pivotante.

3. Collier tubulaire selon la revendication 1 ou 2, caractérisé par le fait que les deux couches (31, 31' ; 32, 32') de la bande (27 ; 27') d'au moins une partie (22 ; 22') du collier tubulaire sont reliées fermement l'une à l'autre, outre par l'intermédiaire de l'œillet de charnière (26 ; 26') prévu au minimum, également sur au moins une zone dans laquelle elles portent l'une contre l'autre, ou bien par l'intégralité de leurs régions superficielles appliquées l'une contre l'autre.

4. Collier tubulaire selon la revendication 3, caractérisé par le fait que les deux couches (31, 31' ; 32, 32') de la bande d'au moins une partie du collier tubulaire sont reliées fermement l'une à l'autre sur au moins une zone de la bride (23 ; 23').

5. Collier tubulaire selon la revendication 4, caractérisé par le fait que les deux couches (31, 31' ; 32, 32') de la bande d'au moins une partie du collier tubulaire, de préférence de chacune des deux parties du collier tubulaire, sont reliées fermement l'une à l'autre, outre par l'intermédiaire de l'œillet de charnière prévu au minimum, pour le reste seulement sur la bride (23, 23'), de préférence sur une seule et unique zone de cette bride.

6. Collier tubulaire selon la revendication 4 ou 5, caractérisé par le fait que les deux couches (31, 31' ; 32, 32') de la bande sont reliées fermement l'une à l'autre, sur la bride (23 ; 23'), au moyen d'une pièce de liaison (40 ; 41) qui présente un trou de passage ou un perçage taraudé et sert à recevoir une vis de serrage (25), cette pièce de liaison pouvant être, de préférence, rivetée sur la bride.

7. Collier tubulaire selon la revendication 6, caractérisé par le fait que la pièce de liaison (40 ; 41) est introduite par concordance de formes dans un trou non circulaire, de préférence dans un trou oblong de la bride de la partie considérée du collier tubulaire.

8. Collier tubulaire selon la revendication 6 ou 7, caractérisé par le fait que la pièce de liaison (40 ; 41) porte, contre la face externe de la bride, par un tronçon (45 ; 45') de configuration rectangulaire longiligne, dont les côtés longs s'étendent transversalement par rapport à la direction longitudinale de la bride (23 ; 23').

9. Collier tubulaire selon la revendication 1 ou 2, caractérisé par le fait que les deux couches (31, 31' ; 32, 32') de la bande (27 ; 27') d'au moins une partie du collier tubulaire sont reliées, l'une à l'autre, seulement par l'intermédiaire de son œillet de charnière (26 ; 26') prévu au minimum.

10. Collier tubulaire selon l'une des revendications 1-9, caractérisé par le fait que les bandes des deux parties (22 ; 22') de ce collier tubulaire consistent en un métal.

11. Collier tubulaire selon l'une des revendications 1-9, caractérisé par le fait que les bandes des deux parties (22 ; 22') de ce collier tubulaire consistent en une matière plastique.

12. Collier tubulaire selon l'une des revendications précédentes, caractérisé par le fait que les parties (22 ; 22') de ce collier tubulaire sont des pièces rigides.

13. Collier tubulaire selon l'une des revendications précédentes, caractérisé par le fait qu'un support (50), implanté sur ce collier, est de préférence formé par un coude d'une bride (23').

14. Collier tubulaire selon l'une des revendications précédentes, caractérisé par le fait que les œillets de charnière (26, 26') sont directement limitrophes des régions, de préférence courbées approximativement en arc de cercle, des demi-coquilles (24, 24') des parties du collier tubulaire.

15. Collier tubulaire selon l'une des revendications précédentes, caractérisé par le fait que les épaisseurs des bandes (27, 27') mesurent environ de 0,5 à 3 mm, leurs largeurs mesurent environ de 8 à 50 mm dans la région à deux couches, et les rayons des régions en arc de cercle de leurs demi-coquilles (24 ; 24') mesurent environ de 5 à 200 mm.

16. Collier tubulaire selon l'une des revendications précédentes, caractérisé par le fait que les bandes (27 ; 27') des deux parties de ce collier tubulaire présentent une épaisseur approximativement constante, et sont d'une largeur approximativement constante dans les régions à deux couches.

FIG.1

FIG.2

FIG.3

FIG.4

FIG.11

FIG.5

31'  27  36  33  36  31

29  26  29

FIG.6

26'  34  27'

30  30

32'  36  34  26'  36  32

32'  24'  31'  22  20

32  31

22'  41  40  24

25  44

27'  51  50  23  42  23  27

FIG.7

FIG.8

FIG.9

FIG.10